# FASCICULE DE BREVET EUROPEEN

(11) **EP 2 095 570 B1**
(45) Date de publication et mention de la délivrance du brevet: **23.08.2017**
(21) Numéro de dépôt: 07870384.0
(22) Date de dépôt: 04.12.2007
(51) Int. Cl.: H04L 12/54, H04L 12/26

(54) **SYSTEME DE RESERVATION DE BANDE PASSANTE POUR DIFFERENTES CLASSES DE TRAFIC**
SYSTEM ZUR RESERVIERUNG VON BANDBREITE FÜR VERSCHIEDENE DATENVERKEHRSKLASSEN
SYSTEM FOR RESERVING BANDWIDTH FOR DIFFERENT CLASSES OF TRAFFIC

(30) Priorité: 06.12.2006 FR 0655333
(43) Date de publication de la demande: 02.09.2009
(73) Titulaire: Thomson Licensing, 92130 Issy-les-Moulineaux (FR)
(72) Inventeur: HUGUIES, Bertrand, 35700 Rennes (FR); MACE, Gael, 35850 Langan (FR); AUTIER, Ingrid, 35410 Domloup (FR)
(74) Mandataire: Huchet, Anne
(86) Numéro de dépôt international: PCT/FR2007/052436
(87) Numéro de publication internationale: WO 2008/074959

(56) Documents cités:
- WO-A-02/21797
- US-A1- 2002 030 864
- US-A1- 2004 128 397
- US-A1- 2005 076 336

## Description

### Domaine de l'invention

La présente invention se rapporte au domaine des réseaux.

La présente invention se rapporte plus particulièrement à un système de réservation de bande passante, fiable et capable de s'adapter, pour différentes classes de trafic, dans des réseaux sans boucle (« *loop free* ») à topologie dynamique et sans contrainte. La présente invention s'applique aux réseaux sans boucle (« *loop-free networks* »), c'est-à-dire qu'à un instant donné, il existe un chemin unique entre deux points du réseau et que ce chemin unique est seulement modifié par un changement de topologie du réseau. Une topologie « sans contrainte » signifie que les équipements de réseau, notamment les hôtes et les équipements de coeur de réseau, sont connectés d'une manière « qui importe peu » (« *in an irrelevant way* » en langue anglaise). Une topologie de réseau « dynamique » signifie que la topologie de réseau évolue dans le temps.

Un exemple de réseau sans boucle est Ethernet, qui peut être utilisé avec le protocole STP (« *Spanning Tree Protocol* ») mais ce n'est pas le seul exemple. En particulier, des réseaux sans fil peuvent être sans boucle.

### Etat de la technique

La réservation de bande passante consiste à allouer ou ne pas allouer un transfert de données en donnant à chaque flux une limitation de bande passante. Cette réservation comporte deux étapes :
- Une première étape consistant à contrôler et vérifier que la réservation peut être accordée ; et
- Une seconde étape consistant à appliquer cette réservation au réseau de sorte que les flux soient garantis en fonction de la réservation accordée.

On connaît dans l'art antérieur plusieurs systèmes et procédés permettant de fournir de la QoS (qualité de service) dans un environnement de réseau. Les trois architectures principales sont :
- DiffServ *(Differentiated Services) ;*
- IntServ *(Integrated Services) ;* et
- MPLS *(MultiProtocol Label Switching).*

Le modèle DiffServ utilise une implémentation du champ d'en-tête IPv4 TOS *(Type of Service)* et du champ de classe de trafic IPv6. Les services différenciés ont pour objectif de fournir une discrimination de service extensible *(scalable)* sans avoir besoin de maintenir un état par flux ou d'effectuer de la signalisation par bond *(per hop signalling).* Cette solution fournit des moyens pour discriminer différents types de flux mais cette discrimination n'est pas déterministe dans la mesure où les différentes classes de trafic sont simplement définies de manière textuelle de telle sorte que chaque équipement de réseau peut implémenter sa propre politique de discrimination, en fonction de son interprétation de la définition de classe de trafic. Ainsi, avec cette solution, il est impossible de garantir une discrimination stricte des flux. De plus, la solution DiffServ ne permet pas de réserver de la bande passante.

Le modèle de service intégré *IntServ* consiste en deux types de services pour supporter des services en temps réel : un service prédictif et un service garanti. Une hypothèse importante est que les ressources du réseau peuvent être contrôlées de façon explicite. Ceci signifie que la réservation de ressources et le contrôle d'admission sont des blocs basiques du modèle des routeurs. Le contrôle d'admission implémente l'algorithme de décision qu'un routeur ou un hôte utilise pour déterminer si on peut accorder à un nouveau flux la qualité de service demandée sans impacter les garanties antérieures. Le protocole de réservation de ressource (RSVP - *Resource Reservation Protocol*) est responsable de la création de l'information spécifique de flux dans les hôtes finaux *(end hosts)* et dans les routeurs tout au long du chemin depuis la source jusqu'à la destination. La solution *IntServ* permet de fournir une réservation de bande passante déterministe qui comprend des fonctionnalités de qualité de service (QoS). L'inconvénient, si l'on suit l'objectif du cadre de la présente invention, est qu'*IntServ* fonctionne uniquement avec des routeurs, c'est-à-dire au niveau de la couche 3 de la pile OSI où les contraintes d'un réseau sans-boucle ne sont pas respectées.

MPLS est une technique générale pour le transport rapide de paquets IP *(Internet Protocol)* ou bien d'autres unités de données correspondant à un protocole, en utilisant des étiquettes *(labels)* assignées à des paquets. Il permet de réaliser de l'équilibrage de charge *(load balancing)* et de router les données autour des points de congestion et ainsi d'améliorer l'efficacité du réseau et de délivrer des niveaux élevés de QoS (qualité de service). Parmi les inconvénients du MPLS, on trouve le fait que cette technique ne permet pas de gérer la QoS et le multicast en même temps. En raison du fait qu'une diversité de services avec différentes contraintes de QoS peuvent être supportés dans les réseaux actuels, de l'ingénierie de trafic *DiffServ* est utilisée comme une extension de MPLS. Des tunnels séparés pour chaque classe de service sont mis en place. Chaque tunnel correspond à un agrégat de trafic demandant le même traitement en termes de QoS. Les tunnels sont mis en place entre des noeuds de source et de destination dans le réseau de communication et une bande passante appropriée est réservée pour chacun d'entre eux. MPLS peut être implémenté sur des commutateurs *(switches)* qui utilisent la couche réseau (couche 3) de la pile TCP/IP, mais les fonctionnalités de QoS n'ont pas encore été implémentées. Ainsi, cette solution ne répond pas au problème que se propose de résoudre la présente invention.

Dans l'environnement de réseau spécifique de la présente invention, le modèle *DiffServ* n'est pas adapté aux besoins, en raison du fait que la bande passante n'est pas garantie. La difficulté est la suivante : dès que le nombre d'utilisateurs est trop élevé, chaque flux sera dégradé, même ceux qui possèdent des contraintes de temps réel. Le modèle *IntServ* satisfait les contraintes de qualité de service, mais le protocole RSVP est uniquement implémenté sur des routeurs, qui ne font pas partie d'un réseau sans boucle.

D'autres travaux ont porté sur l'implémentation d'un protocole pour permettre aux applications de réserver de la bande passante. Un de ces travaux, NetRAP, est un protocole basé sur un système de jetons et utilisé pour donner aux applications un accès au réseau avec garantie de bande passante. Avec ce protocole, chaque application ayant besoin d'une bande passante garantie commence une session. Le jeton effectue une rotation parmi les sessions : seul celui qui a le jeton a la permission de transmettre des données. Celui qui a le jeton conserve le jeton pour au plus le THT *(Token Holding Time),* qui est une portion du temps prédéterminé appelé TRT *(Token Rotation Time),* et passe le jeton vers une autre session. Le TRT est le temps d'un tour du jeton pour une session. Après que la dernière session a eu le jeton, d'autres applications peuvent accéder au réseau pour envoyer des données non garanties jusqu'à ce que le TRT soit atteint, pour permettre à la première session d'avoir le jeton, et ainsi de suite. Une application qui a débuté une session a la garantie que des collisions ne peuvent avoir lieu car une seule session et donc un seul noeud de réseau peuvent avoir le jeton à un moment donné. Cette solution est très restrictive car elle ne permet pas à beaucoup de flux d'être transmis simultanément et ne gère pas de fonctionnalité liée à la qualité de service.

Dans les réseaux Ethernet, où les commutateurs sont les seuls équipements de réseau, plusieurs solutions ont tenté de résoudre le problème de la réservation de bande passante.

L'art antérieur connaît, par le brevet américain US 6 941 380 (Nortel), un procédé permettant d'allouer de la bande passante dans un réseau Ethernet ayant une topologie avec des contraintes. L'invention, objet de ce brevet américain, est basée sur un gestionnaire centralisé qui reçoit des demandes de bande passante, vérifie si de la bande passante est disponible et répond à l'équipement qui a effectué la demande. Les fonctionnalités limitantes du système sont qu'il est basé sur une topologie de réseau avec contrainte et qu'il n'est pas conscient des classes de trafic. Ce brevet américain décrit comment réserver de la bande passante dans deux cas d'architectures de réseau, illustrés Figure 1 et 2 dans ce brevet américain. Le système n'a pas la capacité de réserver de la bande passante en dehors du cadre de ces deux exemples de réseau. La seconde limitation est que, si le système est capable de réserver de la bande passante, il n'est pas capable d'effectuer des discriminations entre différents types de trafic qui comportent des contraintes de qualité de service différentes au sein de ces réservations.

D'autres brevets et demandes de brevets, comme les documents WO 2006/051519, US 2005/0128951, et EP 1 662 716 décrivent comment améliorer le comportement d'un système d'allocation de bande passante mais ne définissent pas de nouvelles fonctionnalités.

L'art antérieur connaît également, par la demande de brevet américain US 2005/076336 (Nortel), un procédé et un appareil pour ordonnancer des ressources dans un réseau commuté. Cette demande de brevet américain décrit plus particulièrement une manière de gérer des transferts de ressources, ou plus généralement des connexions entre des entités d'un réseau.

Le document WO 02/21797 décrit un gestionnaire de ressource dans un système de téléphonie IP.

Le document US 2004/0128397 décrit un procédé pour la vérification de ressources de transmission dans un réseau de communication par paquets lorsqu'il y a des changements de topologie.

### Exposé de l'invention

L'invention a pour objet un système de réservation de bande passante selon la revendication 1 et un dispositif de communication selon la revendication 8.

Un système de réservation de service, dans le cadre de la présente invention, est flexible car il permet de réserver de la bande passante quelque soit la topologie de réseau, même si celle-ci évolue dans le temps, et en raison du fait qu'il permet de gérer plusieurs classes de trafic. Dans le cadre de la présente invention, un système de réservation de service fournit une qualité de service (« *Quality of Service* » ou QoS) déterministe car elle permet de s'assurer de la validité et de la cohérence de tous les paramètres de la QoS : garantie de bande passante et traitement des classes de trafic. L'optimisation de la réservation permet d'effectuer plusieurs réservations de bande passante entre les mêmes sources et destinations. Ceci améliore la réservation de bande passante en permettant d'augmenter ou bien de diminuer la quantité de bande passante réservée entre deux hôtes, ce dont les applications ont besoin, et en permettant à différentes applications de réserver de la bande passante avec différentes qualités de service. Enfin, la présente invention donne des mécanismes pour protéger le système d'hôtes qui pourraient corrompre les réservations de bande passante en surchargeant le réseau.

Dans le cadre de la présente invention, différentes classes de trafic dans des bandes passantes réservées sont gérées, ce qui est une fonctionnalité supplémentaire par rapport aux systèmes et procédés de l'art antérieur.

A l'exception du MPLS qui fournira peut-être dans le futur des fonctionnalités de QoS dans le cas particulier des réseaux sans boucle, comme les réseaux Ethernet, il n'existe pas dans l'état de la technique, de système permettant de réserver de la bande passante et permettant de fournir des traitements pour différentes classes de trafic basés sur une qualité de service exigée dans des réseaux sans-boucle où la topologie est sans contrainte et imprévisible. La présente invention entend remédier aux inconvénients de l'art antérieur en proposant un tel système.

A cet effet, la présente invention concerne, dans son acception la plus générale, un système de réservation de bande passante dans un réseau de communication comprenant un gestionnaire centralisé de bande passante qui implémente un protocole de réservation de bande passante et qui est relié à au moins un hôte ; caractérisé en ce qu'une entité externe fournit au gestionnaire centralisé de bande passante une vue à jour de la topologie logique de réseau ; et en ce que le gestionnaire centralisé de bande passante comporte des moyens pour, à réception d'une requête de réservation de bande passante entre une source et une destination pour une certaine classe de trafic, calculer le chemin de réseau courant entre la source et la destination en utilisant un algorithme, ledit chemin empruntant au moins un lien du réseau, et des moyens pour vérifier sur chaque lien du chemin qu'il y a suffisamment de bande passante disponible pour la classe de trafic demandée dans la réservation demandée.

De préférence, ledit algorithme est une version simplifiée de l'algorithme de Dijkstra.

Avantageusement, si la vérification concernant la quantité de bande passante aboutit à un résultat positif, la bande passante est accordée et le gestionnaire de bande passante réserve de la bande passante sur chaque lien de réseau.

Selon un mode de mise en oeuvre particulier, le gestionnaire centralisé comprend des moyens pour, lors d'une réservation de bande passante, mettre à jour sa propre information et appliquer une politique de réseau sur chaque équipement de réseau impliqué dans la réservation.

De préférence, le gestionnaire centralisé de bande passante comporte des moyens pour indiquer à un hôte demandeur de réservation de bande passante s'il accepte ou non une réservation de bande passante.

Avantageusement, ledit protocole de réservation de bande passante est connu par les hôtes du réseau qui souhaitent réserver de la bande passante.

De préférence, ladite topologie possède la forme d'une liste de noeuds de réseau et de liens logiques de réseau.

Selon une variante avantageuse, ledit système de réservation de bande passante comporte des moyens pour réserver de la bande passante en fonction de besoins d'applications.

La présente invention se rapporte également à un dispositif de communication, dans un réseau de communication, implémentant un protocole de réservation de bande passante et relié à au moins un hôte, caractérisé en ce qu'il comporte :
- des moyens pour recevoir, d'une entité externe, une vue à jour de la topologie logique de réseau ;
- des moyens pour, à réception d'une requête de réservation de bande passante entre une source et une destination pour une certaine classe de trafic, calculer le chemin de réseau courant entre la source et la destination en utilisant un algorithme, ledit chemin empruntant au moins un lien du réseau ; et
- des moyens pour vérifier sur chacun des liens du chemin qu'il y a suffisamment de bande passante disponible pour la classe de trafic demandée dans la réservation demandée.

Comme les équipements de coeur de réseau d'un réseau sans-boucle ne fournissent pas de moyens pour une réservation déterministe de bande passante et un traitement de classes de trafic, la façon la plus facile de fournir la qualité de service requise dans une topologie sans contrainte et imprévisible d'un réseau sans-boucle est de centraliser la réservation de bande passante dans un gestionnaire de bande passante puisqu'il n'est pas possible de distribuer cette fonctionnalité parmi les équipements de coeur de réseau.

Le brevet américain US 6 941 380 (Nortel) a décrit une architecture similaire, mais qui permet uniquement de réserver de la bande passante dans deux cas précis de topologie de réseau Ethernet. En outre, ce système ne fournit ni de traitement de classes de trafic dans une bande passante réservée, ni d'ajustement dynamique des besoins en bande passante d'applications.

La présente invention définit un système dans lequel il est possible de réserver de la bande passante dans une topologie sans contrainte et imprévisible de réseau sans-boucle et de fournir de la discrimination de classe de trafic au sein de cette bande passante réservée.

Le système, selon la présente invention, est basé sur un gestionnaire centralisé de bande passante qui implémente un protocole pour la réservation de bande passante. Ce protocole est connu par des hôtes du réseau qui souhaitent réserver de la bande passante.

Quelque soit la topologie du réseau commuté, le gestionnaire de bande passante reçoit des demandes de réservation de bande passante des hôtes demandant une adresse source définie et un numéro de port applicatif source défini, une adresse de destination et un numéro de port applicatif destination, une quantité définie de bande passante et une classe de trafic définie.

Le gestionnaire de bande passante traite ensuite ces requêtes afin de déterminer si la réservation peut être effectuée sur chaque lien du chemin de réseau entre la source et la destination demandées. Comme la topologie du réseau est sans contrainte, une entité externe fournit au gestionnaire de bande passante une vue à jour de la topologie logique de réseau. Cette topologie est fournie comme une liste de noeuds de réseau et de liens logiques de réseau. Ensuite, le gestionnaire de bande passante calcule le chemin de réseau courant entre la source et la destination en utilisant un algorithme simplifié basé sur l'algorithme de Dijkstra. Une fois que ce chemin est calculé, le gestionnaire de bande passante l'utilise pour vérifier sur chaque lien du chemin qu'il y a suffisamment de bande passante disponible pour la classe de trafic demandée dans la réservation demandée.

Si la bande passante est accordée, le gestionnaire de bande passante réserve de la bande passante sur chaque lien de réseau. Cette étape comprend la mise à jour de sa propre information et l'application d'une politique de réseau sur chaque équipement de réseau impliqué dans la réservation. Le gestionnaire de bande passante gère et contrôle la politique de réseau.

Finalement, une réponse du gestionnaire de bande passante est envoyée à l'hôte demandeur lui disant s'il accepte ou non.

Les hôtes qui connaissent le processus de réservation de bande passante sont également capables de libérer l'utilisation de la bande passante, de demander une augmentation ou une diminution de la bande passante réservée. Le processus pour demander une augmentation de la bande passante réservée est le même que pour une nouvelle demande de bande passante : la quantité de bande passante dans la requête sera la nouvelle quantité de bande passante réservée.

Lorsqu'on lui demande de réduire la bande passante réservée, un hôte envoie une demande pour libérer ou réduire la bande passante réservée. Le gestionnaire de bande passante « dé-réserve » la bande passante en mettant à jour sa propre information et en mettant à jour la politique de réseau sur chaque équipement de réseau impliqué dans la réservation.

Cette capacité à augmenter ou diminuer la bande passante réservée permet d'adapter le système au changement de topologie. Avant d'enlever un équipement de réseau impliqués dans les réservations de bande passante, celles-ci doivent être libérées.

La présente invention présente de nombreux avantages, parmi lesquels on trouve :
- L'adaptation de la réservation de bande passante aux besoins de chaque application des hôtes du réseau.
- La réservation de la bande passante est basée sur une topologie sans contrainte et dynamique d'un réseau sans boucle.
- La fourniture de différentes classes de trafic pour différents besoins de qualité de service (QoS).
- La réservation de bande passante et le respect des contraintes de QoS dans un réseau sans boucle.
- Le contrôle de l'accès des hôtes à la bande passante réservée.

### Brève description des dessins

On comprendra mieux l'invention à l'aide de la description, faite ci-après à titre purement explicatif, d'un mode de réalisation de l'invention, en référence aux figures annexées :
- la Figure 1 illustre un environnement de réseau dans le cadre de la présente invention ;
- la Figure 2 illustre un gestionnaire de bande passante et un module de découverte de topologie de réseau ;
- la Figure 3 illustre une limitation sur des sources, le système ayant la connaissance de la procédure de réservation de bande passante ;
- la Figure 4 illustre une limitation sur des sources, le système n'ayant pas la connaissance de la procédure de réservation de bande passante; et
- la Figure 5 représente la politique de commutation sur des dispositifs de coeur de réseau.

### Description détaillée des modes de réalisation de l'invention

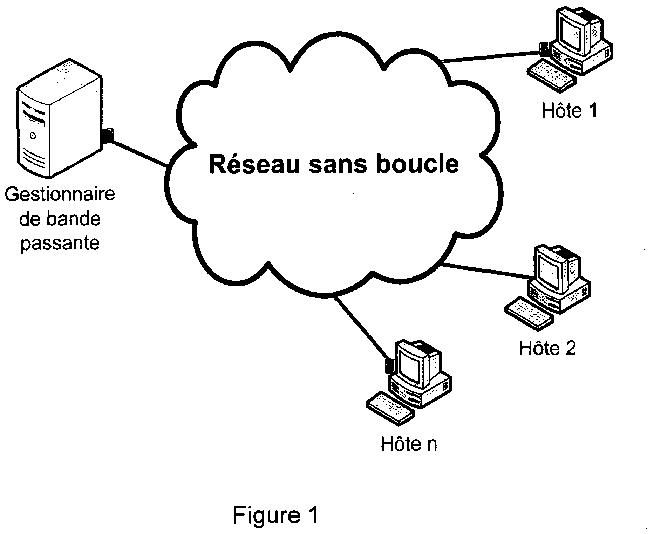

Dans le cadre de la présente invention, le système de réservation de bande passante est basé sur un gestionnaire centralisé, qui reçoit les demandes de bande passante des hôtes du réseau qui souhaitent réserver de la bande passante. Le réseau est sans boucle et possède une topologie imprévisible et sans contrainte. Il y a un nombre indéfini d'hôtes et d'équipements de réseau. L'architecture du réseau, c'est-à-dire la façon dont les équipements de réseau sont connectés est sans contrainte. L'environnement de réseau est représenté Figure 1.

Les équipements de coeur de réseau ne savent pas ou ne comprennent pas la procédure de réservation de bande passante. Ils voient simplement des messages de réseau classiques transitant à travers le réseau. Quelques hôtes, ceux qui souhaitent réserver de la bande passante et nécessairement le gestionnaire de réseau, connaissent la procédure de réservation de bande passante mais on ne demande pas à tous les hôtes de comprendre le protocole.

Un gestionnaire de bande passante centralisé reçoit des demandes de réservation de bande passante d'hôtes sur le réseau qui demandent des garanties en termes de qualité de service.

Le processus de réservation de bande passante comporte les étapes suivantes :
1. Un hôte envoie une demande de réservation de bande passante comprenant une quantité de bande passante à réserver ainsi qu'une source et une destination.
2. Le gestionnaire de bande passante reçoit cette requête.
3. Le gestionnaire de bande passante vérifie qu'il y a suffisamment de bande passante sur chacun des liens du réseau impliqués dans la réservation. Il vérifie également que l'hôte demandant la réservation possède la permission de réserver de la bande passante en se basant sur une liste d'hôtes ayant ce type de droits. Le choix et la génération de cet ensemble de liens n'est pas évident. C'est pourquoi les procédés et systèmes de l'art antérieur limitent les possibilités de réservation à des topologies avec contraintes.
4. Si la réservation de bande passante peut être accordée, le gestionnaire de bande passante réserve la bande passante.
5. Le gestionnaire de bande passante envoie une réponse indiquant si la réservation de bande passante a été accordée ou non.

La présente invention propose la fonctionnalité suivante : l'adaptation de la réservation de bande passante en se basant sur les besoins des applications. Ceci permet d'optimiser et de rendre plus flexible le système de réservation de bande passante en adaptant la réservation de bande passante aux besoins de chaque type d'application sur chaque hôte du réseau. L'adaptation de la réservation suppose d'avoir un moyen pour faire varier la quantité de bande passante pour une réservation. Permettre à chaque application de chaque hôte de réserver de la bande passante en fonction de ses besoins suppose que les informations contenues dans les demandes de bande passante soient plus étendues.

Le système de réservation de bande passante permet de modifier la quantité de bande passante réservée pour une réservation de bande passante spécifiée. Ceci est réalisé à l'aide de différents types de messages qui sont respectivement utilisés pour :
- une nouvelle réservation de bande passante (demande de bande passante classique) ;
- une augmentation de la bande passante réservée ;
- une diminution de la bande passante réservée ; et
- une libération d'une réservation de bande passante.

A réception d'un message appartenant à une des catégories citées ci-dessus, le gestionnaire de bande passante peut avoir deux comportements différents. Si on lui demande plus de bande passante réservée (nouvelle réservation de bande passante ou bien augmentation de la bande passante réservée), le gestionnaire de bande passante applique le même processus que pour une demande de bande passante classique telle que définie précédemment, y compris tous les mécanismes ajoutés et les caractéristiques qui entrent dans le cadre de la présente invention. Si on lui demande moins de bande passante réservée (libération ou diminution de la bande passante réservée), le gestionnaire de bande passante traite les messages comme ceci :
1. Un hôte envoie une demande de réservation de bande passante comprenant la quantité de bande passante à conserver ainsi que des informations suffisantes pour l'identification de la réservation de bande passante existante.
2. Le gestionnaire de bande passante reçoit la requête.
3. (Le gestionnaire de bande passante n'a pas besoin de vérifier si la libération de bande passante est possible car c'est toujours possible).
4. Le gestionnaire de bande passante met à jour ses tables internes.
5. Le gestionnaire de bande passante envoie une réponse indiquant que la réservation a été modifiée.

Le besoin de qualité de service au sein d'un réseau ne dépend pas uniquement de la source et de la destination d'un trafic particulier. Il est évident que ceci dépend également du type de services qui utilisent le réseau. Par exemple, il n'existe pas de contrainte de délai pour un échange de fichier à travers un réseau, alors qu'une communication « voix » a besoin de garanties en termes de délai et de gigue. Ces deux types de services peuvent être utilisés sur le même hôte du réseau. Ainsi, il existe un besoin de différencier le type de service dans des réservations de bande passante.

Le type de service qui utilise un réseau est défini par le numéro de port applicatif de la couche de transport réseau. Ces numéros de ports sont, de façon commune, définis pour les différents protocoles de transport existants. Ainsi, cette valeur correspond exactement au type de service.

Le système de réservation de bande passante utilise, pour l'identification d'une réservation de bande passante, les numéros de ports applicatifs de la source et de la destination.

L'identification d'une réservation de bande passante est utilisée partout où l'on a besoin de différencier plusieurs réservations de bande passante. Ceci inclut les messages de réservation de bande passante et les tables internes du gestionnaire de bande passante.

Les procédés et systèmes de l'art antérieur sont basés sur une topologie avec contraintes, c'est-à-dire des cas fixés de topologie de réseau qui doivent être connus par le système avant que des réservations de bande passante ne commencent, et qui ne doivent pas évoluer dans le temps.

Le système de réservation de bande passante selon la présente invention permet de réserver de la bande passante dans un réseau sans boucle à topologie imprévisible et sans contrainte. Ceci signifie que le système fonctionne quelle que soit la topologie du réseau, que la topologie n'a pas à être donnée de façon statistique au système et que les changements de topologie sont gérés de façon automatique par le système.

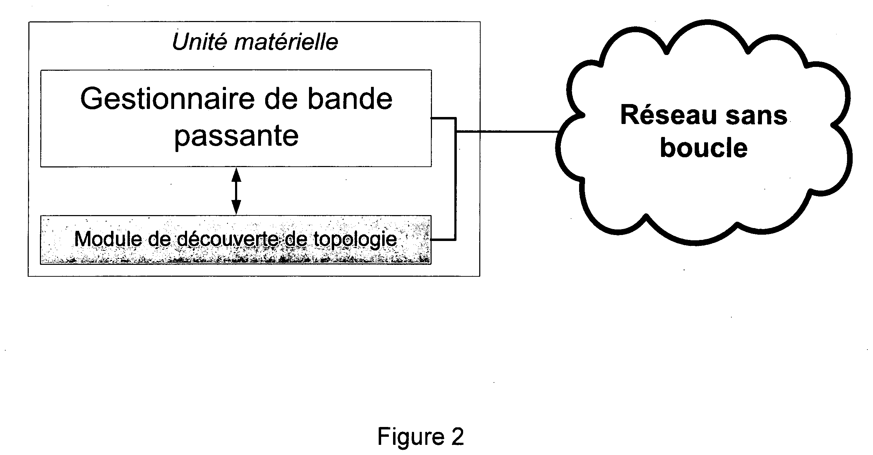

Cette caractéristique est basée sur un module de découverte dynamique de la topologie d'un réseau, nommé module de topologie et qui donne au gestionnaire de réservation de bande passante une vue à jour de la topologie du réseau. Ce module fournit une représentation de la topologie de réseau sans boucle vue du gestionnaire de bande passante. Ainsi, ce module est installé sur le même matériel et dans le même environnement logiciel que le gestionnaire de bande passante. La Figure 2 illustre un gestionnaire de bande passante et un module de découverte de topologie de réseau.

Le module de topologie fonctionne indépendamment du gestionnaire de bande passante. Il maintient toujours une vue exacte et à jour de la topologie de réseau. Par exemple, le réseau peut être de type Ethernet.

Il existe deux types de communications entre le gestionnaire de bande passante et le module de topologie : le gestionnaire de bande passante demande une représentation de la topologie en appelant une fonction fournie par le module de topologie et ensuite, le module de topologie avertit le gestionnaire de bande passante d'un changement de topologie. Ceci permet au gestionnaire de bande passante d'être toujours informé, de façon exacte, de la topologie de réseau courante.

Le module de topologie fournit une représentation de topologie sous la forme d'une table de noeuds du réseau et d'une table des liens du réseau sans boucle.

La table des noeuds contient l'information suivante : un identifiant unique et invariable de l'équipement (ceci pourrait être l'adresse physique de l'équipement si celle-ci ne change pas dans le temps).

La table des liens contient les informations suivantes :
- Type du réseau : Ethernet, Wi-Fi, Wi-Max etc. ;
- Couple (identifiants de noeud, numéros de port physique) aux deux extrémités du lien ;
- Bande passante totale disponible sur le lien dans le cas d'un lien filaire.

La réservation est appliquée en fonction de la transmission de réseau utilisée.

Le gestionnaire de bande passante est maintenant au courant de la topologie du réseau sans boucle. Il utilise cette représentation pour adapter sa procédure de réservation à la topologie sans contrainte.

Durant la troisième étape de la procédure de réservation de bande passante (nouvelle réservation de bande passante ou augmentation de la bande passante réservée, cf. ci-dessus), le gestionnaire de bande passante vérifie s'il y a suffisamment de bande passante disponible sur chacun des liens du réseau impliqués dans la réservation. Cet ensemble de liens doit être connu de façon à pouvoir déterminer quel est le bon chemin au sein du réseau sans boucle, c'est-à-dire le chemin unique entre la source et la destination de la réservation. Dans le cas d'une topologie avec contrainte, le chemin est déterminé de façon statistique pour chaque cas de demande de réservation de bande passante. Dans le cadre de la présente invention, la topologie est sans contrainte. Ainsi, il est nécessaire de calculer le chemin au sein du réseau.

Pour cela, un algorithme de Dijkstra peut être utilisé. L'algorithme de Dijkstra permet de calculer les différents chemins entre deux points dans un graphe, et de calculer le plus court chemin entre ces deux points, en se basant sur les poids des arêtes du graphe. Dans le cadre de la présente invention, le graphe est un arbre de noeuds du réseau, c'est-à-dire qu'il existe un unique chemin entre deux points du graphe. Comme il existe une unique solution pour un chemin entre les points de l'arbre du réseau, il n'est pas utile d'attribuer des poids aux arêtes du réseau. De plus, l'algorithme est arrêté une fois qu'un chemin est trouvé (en effet, c'est l'unique chemin).

L'utilisation du module de topologie et de l'algorithme de Dijkstra (par exemple) en combinaison permet de rendre le système de réservation de bande passante indépendant de la topologie du réseau sans boucle : la topologie peut être sans contrainte. De plus, comme le module de topologie avertit le gestionnaire de bande passante des changements de topologie, le gestionnaire de bande passante peut réserver de la bande passante dans une topologie dynamique. Bien entendu, afin de préserver l'intégrité du système de réservation de bande passante, avant d'enlever un équipement de réseau impliqué dans des réservations de bande passante, ces dernières doivent être libérées.

La présente invention propose également une autre fonctionnalité : la réservation de bande passante pour différentes classes de trafic. Les classes de trafic permettent d'attribuer des priorités aux différents trafics de réseau tout en conservant la garantie de bande passante. Ces attributions de priorité permettent d'assurer des délais et gigues minimaux pour un certain type de trafic tout en garantissant la bande passante réservée pour tout le trafic réservé.

Le processus de réservation de bande passante peut traiter N classes de trafic au sein d'une bande passante réservée. Des informations additionnelles sont ajoutées pour l'identification de la réservation de bande passante : le numéro de classe de trafic. Ce champ définit le niveau de priorité de la bande passante réservée dans le réseau sans boucle. La classe de trafic *n-1* a une priorité plus basse que la classe n qui a elle-même une priorité plus basse que la classe *n+1.*

Comme la garantie de bande passante est assurée de façon stricte pour chaque classe de trafic, la troisième étape de la procédure pour réserver plus de bande passante (nouvelle réservation de bande passante ou augmentation de la bande passante réservée ; cf. ci-dessus) ne change pas quelle que soit la classe de trafic demandée. Le calcul de l'ensemble des liens ne change pas car, bien entendu, la source et la destination sont indépendantes de la classe de trafic. De même pour la vérification de la quantité de bande passante disponible sur chaque lien du chemin de réseau calculé, la quantité totale de bande passante demandée doit être disponible quelle que soit la classe de trafic. Toutefois, le champ « classe de trafic » de l'identifiant de réservation de bande passante peut être utilisé dans cette troisième étape de façon à mettre en place une politique particulière de traitement des demandes de bande passante. Par exemple, il peut être choisi de traiter en premier les demandes de réservation de bande passante de plus haute priorité.

La seconde étape du processus de réservation est l'application de la réservation dans le réseau. La classe de trafic prend ici toute son importance. Le gestionnaire de bande passante doit appliquer une politique de réseau qui assure des attributions de priorités aux différentes classes de trafic.

La réservation de bande passante dans un réseau sans boucle à topologie sans contrainte implique de mettre en place plusieurs procédures afin de garantir des réservations de bande passante fiables.

La réservation de bande passante est assurée par deux processus :
- échange de demandes/réponses demandant des réservations de bande passante cohérentes ;
- application des réservations de bande passante sur le réseau. Cette seconde étape assure que les demandes de bande passante sont bien respectées.

L'application des réservations de bande passante est mise en place par deux fonctionnalités. Une fois que la cohérence en termes de bande passante a été garantie par la communication de réservation de bande passante, le premier contrôle à mettre en oeuvre consiste à s'assurer que les sources n'émettent pas plus de trafic que ce qui leur est permis dans chaque classe de trafic. Le second contrôle à mettre en oeuvre consiste à s'assurer que le réseau transportera correctement les flux en fonction de leur qualité de service garantie (bande passante et garantie de classe de trafic).

Plusieurs types de trafics passent à travers un réseau sans boucle. Ces différents types doivent être pris en charge en fonction de leur qualité de service garantie. Une seule source peut émettre plusieurs types de trafic. Les équipements de coeur de réseau baseront leur processus de transmission sur le type de trafic.

Le réseau doit prendre en charge N+2 types de trafic où N est le nombre de classes de trafic défini ci-dessus. N classes de trafic utilisent la procédure de réservation de bande passante.

Le trafic de données qui n'utilise pas la procédure de réservation de bande passante correspond au type de *trafic « Best effort »* qui n'a aucune garantie, ni pour la bande passante, ni pour le délai, ni pour la gigue ou pour la perte de paquets.

Le dernier type de données est le trafic dédié à la gestion du système de réservation de bande passante. Cela comprend les échanges réalisés pendant la procédure de réservation et le trafic généré par le module de topologie. La bande passante de ce trafic est maximisée sur chaque lien du réseau sans boucle de façon à être réservée avant une quelconque autre réservation de bande passante. Ce type de trafic possède la plus haute priorité afin de garantir que le système de réservation de bande passante puisse toujours fonctionner correctement.

La présente invention définit un système dans lequel il y a N+2 niveaux de priorité requis dans les dispositifs de réseau, où N est le nombre de classes de trafic tel que défini ci-dessus.

Les sources doivent indiquer le type de trafic pour les trames qu'elles émettent. Les dispositifs de coeur de réseau doivent transporter correctement le trafic et la disponibilité en termes de bande passante est garantie par la commande de réservation de bande passante. Ces équipements ont uniquement à garantir la priorité de chaque trame en fonction des indications concernant le type de trafic fournies par les sources dans les trames.

Il a été indiqué que les hôtes pouvaient ne pas connaître la procédure de réservation de bande passante. Ainsi, ces hôtes émettent du trafic sans aucune indication concernant le type de trafic. Dans ce cas, les équipements de coeur de réseau doivent considérer le trafic comme appartenant au type de trafic « *Best effort* », c'est-à-dire possédant la priorité la plus basse.

Plusieurs technologies existent pour marquer le trafic. Dans le cas du protocole Ethernet, VLAN est une solution pour indiquer l'appartenance d'une trame de réseau à un groupe. La présente invention est indépendante du choix de la technologie.

Les hôtes implémentant la procédure de gestion de bande passante doivent respecter les ordres qu'ils ont reçus du gestionnaire de bande passante. Le comportement varie en fonction du type de trafic :
- Trafic de gestion de bande passante : une quantité suffisante de bande passante a été réservée par le système de réservation de bande passante pour ce type de trafic. Ainsi, les sources émettent ce type de trafic, comme convenu.
- Bande passante réservée : les sources doivent seulement transmettre du trafic pour une réservation particulière et une classe de trafic particulière si elles ont reçu une demande de réservation acceptée pour cette réservation de bande passante. Les sources doivent également respecter la quantité de bande passante réservée.
- Trafic de *type « Best effort »* : les sources doivent uniquement transmettre ce type de trafic s'il existe de la bande passante disponible après avoir transmis les deux types précédents de trafic.

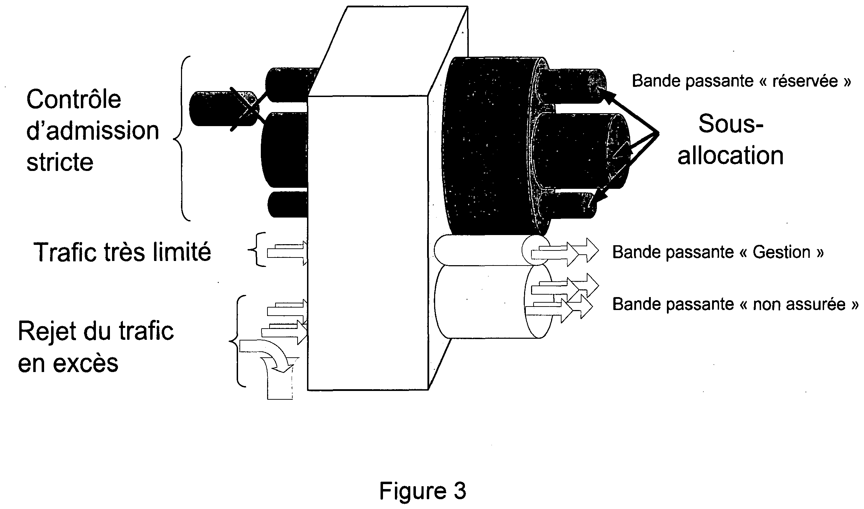

La Figure 3 illustre le comportement de sources implémentant la procédure de réservation de bande passante. La Figure 3 présente les trois types de trafic évoqués au paragraphe précédent : le trafic de gestion de bande passante, le trafic correspondant à de la bande passante réservée et le trafic de type « *best effort* ». Suivant le type de trafic émis, la source a un comportement différent. Sur la Figure 3, chaque niveau de gris signifie que le type de trafic est indiqué dans la trame par sources.

Pour émettre du flux réservé, la source doit procéder à une demande de réservation de bande passante comme indiqué ci-dessus. Si la requête est acceptée, la source peut envoyer le flux en le marquant de type « réservé ». Si la requête n'est pas acceptée, alors la source n'envoie pas un flux comme indiqué par un tube barré.

Le flux de gestion de la bande passante est toujours envoyé comme décrit dans le paragraphe précédent.

La source envoie autant de trafic de type *« best effort »* qu'elle peut, c'est-à-dire, le reste de la bande passante de son interface réseau. Le trafic supplémentaire qu'elle souhaiterait envoyer est soit rejeté (comme indiqué par la flèche vers le bas sur la Figure 3), soit envoyé ultérieurement.

Les sources qui n'implémentent pas la procédure de réservation de bande passante transmettent uniquement du trafic non marqué qui sera considéré comme du trafic *« Best effort »* par les équipements de coeur de réseau comme cela a été indiqué ci-dessus.

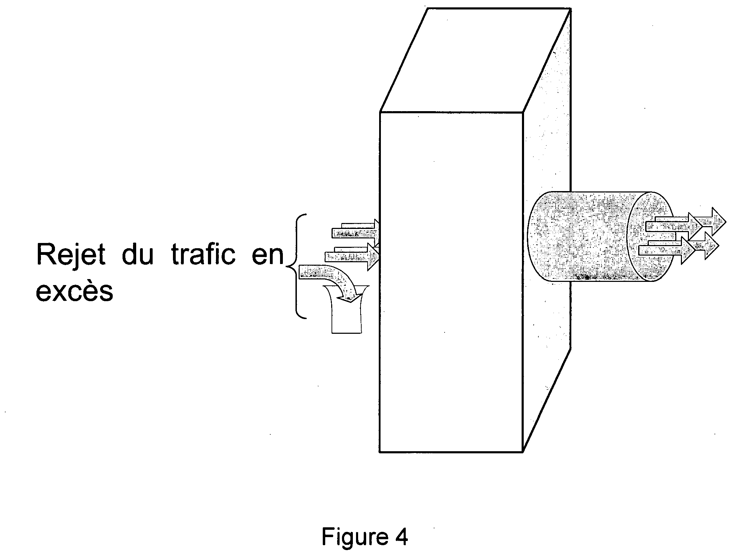

La Figure 4 illustre le comportement de sources qui n'implémentent pas la procédure de réservation de bande passante. Ici, les sources n'indiquent pas le type de trafic. Ce type de source se comporte comme le fait avec du trafic de *type « best effort »* une source implémentant la procédure de réservation de bande passante. Le trafic en excès est rejeté, comme l'indique la flèche vers le bas sur la Figure 4.

La gestion de politique du réseau est une autre fonctionnalité de l'application de réservation de bande passante. Le gestionnaire de bande passante garantit la distribution des indications correctes d'utilisation de bande passante au sein de l'intégralité du réseau sans boucle. Ensuite, les sources respectent ces indications comme cela est expliqué ci-dessus. Le dernier contrôle à mettre en place afin de garantir un transport correct des flux consiste en l'application d'une politique de réseau correcte sur tous les équipements de coeur de réseau au sein du réseau sans-boucle.

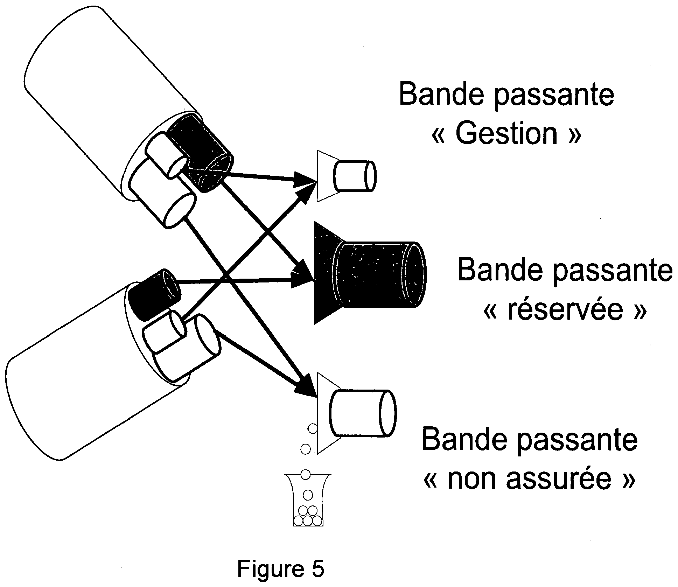

Cette politique doit seulement garantir le respect des priorités tel que cela est décrit plus haut. La Figure 5 illustre de quelle manière un équipement de coeur de réseau doit se comporter lorsqu'il doit faire face à différents types de trafic.

Le trafic de gestion a la priorité la plus haute et le gestionnaire de bande passante garantit qu'il y a suffisamment de bande passante sur chaque lien. Ainsi, ce trafic est toujours transmis et transporté au sein du réseau. La bande passante réservée consiste en N classes de trafic. Chacune d'entre elles est traitée en fonction de sa priorité définie. Le gestionnaire de bande passante garantit qu'il y a suffisamment de bande passante sur chaque lien. Ainsi, ce trafic est toujours transmis et transporté au sein du réseau. Enfin, le trafic de type « *Best effort »* a la priorité la plus basse et peut ne pas être transporté s'il n'y a pas assez de bande passante sur un lien. Dans ce cas, une partie du trafic est rejetée par l'équipement de coeur de réseau comme le montre la figure 5.

Ce comportement est évalué au niveau de chaque équipement de coeur de réseau mais l'implémentation de ce comportement peut varier d'un lien à un autre et d'un équipement de réseau à un autre. Le système de réservation de bande passante selon la présente invention est indépendant du type de lien utilisé sur le réseau et utilise le champ *« type de lien »* fourni par le module de topologie dans la table des liens (cf. ci-dessus) afin d'appliquer la technologie implémentant le comportement.

Plusieurs techniques existent déjà pour l'implémentation de ce comportement. Pour Ethernet, la priorité peut être configurée pour chaque VLAN. Des liens de réseau implémentent l'ouverture de la connexion avec une priorité spécifique.

Le système de réservation de bande passante accepte sur le réseau les hôtes de réseau qui connaissent la procédure de réservation de bande passante et les hôtes qui ne la connaissent pas. Afin d'éviter qu'un hôte non sûr ne réserve de la bande passante, il a été imaginé précédemment d'utiliser une liste d'hôtes (« *registered hosts* » ou hôtes enregistrés) qui ont la permission de réserver de la bande passante. Cependant, le fait d'éviter que des hôtes non sûrs ne demandent de la bande passante ne permet pas d'éviter que ces mêmes hôtes envoient du trafic ayant une priorité élevée, ce qui pourrait causer des dégradations des réservations de bande passante correctes.

Le système de gestion de bande passante fournit des mécanismes pour gérer de façon dynamique la liste d'accès d'hôtes qui ont la permission de réserver de la bande passante et d'envoyer du trafic possédant une priorité, et pour éviter que des hôtes non enregistrés n'envoient du trafic réservé. Cette liste d'accès est présente dans la même entité matérielle que le gestionnaire de bande passante, dans notre exemple.

Cette fonctionnalité utilise la capacité des équipements de coeur de réseau à bloquer du trafic pour un port physique donné et un certain type de trafic. L'enregistrement d'un hôte souhaitant réserver de la bande passante suit la procédure suivante :
1. Initialisation du système : chaque port de chaque équipement de coeur de réseau bloque tous les types de trafic à l'exception de celui qui a la priorité la plus basse, c'est-à-dire le type de trafic « *Best effort* ». La liste d'accès est remise à zéro : elle est vidée.
   A cette étape, les hôtes ne peuvent pas envoyer de demande de réservation de bande passante car le trafic de gestion est bloqué. Le trafic comportant des priorités est également bloqué.
2. Un hôte qui souhaite réserver de la bande passante doit au préalable s'enregistrer auprès du gestionnaire de bande passante en envoyant, en tant que trafic de type « *Best effort* », une demande d'enregistrement au gestionnaire de bande passante.
3. Le gestionnaire reçoit la demande d'enregistrement et décide, en se basant sur sa politique d'accès, de permettre ou de ne pas permettre à cet hôte de demander de la bande passante réservée.
4. Si le gestionnaire de bande passante permet à l'hôte de réserver de la bande passante, il ajoute son identité à la liste d'accès et débloque le trafic de gestion sur le port de l'équipement de coeur de réseau auquel l'hôte est connecté.
   A cette étape, l'hôte peut demander de la bande passante réservée car il peut envoyer du trafic de gestion. Toutefois, il ne peut pas envoyer de trafic réservé car les trafics avec priorités sont toujours bloqués sur le port de l'équipement de coeur de réseau auquel l'hôte est connecté.

Une fois qu'un hôte est enregistré, le gestionnaire de bande passante traite les différents types de demandes de réservation de bande passante comme cela a été décrit ci-dessus. Lorsqu'une demande de réservation est accordée, le gestionnaire de bande passante, en plus des tâches déjà citées, débloque le type de trafic demandé sur le port de l'équipement de coeur de réseau auquel l'hôte est connecté.

A cette étape, l'hôte peut envoyer du trafic non réservé, des demandes de réservation de bande passante et du trafic pour lequel il a demandé une réservation de bande passante.

L'invention est décrite dans ce qui précède à titre d'exemple. Il est entendu que l'homme du métier est à même de réaliser différentes variantes de l'invention sans pour autant sortir du cadre du brevet.

## Revendications

1. Système de réservation de bande passante dans un réseau de communication sans boucle à topologie dynamique et sans contrainte, comprenant un gestionnaire centralisé de bande passante qui implémente un protocole de réservation de bande passante adapté audit réseau et qui est relié à au moins un hôte ;
**caractérisé en ce qu'**une entité externe fournit au gestionnaire centralisé de bande passante une vue à jour de la topologie logique de réseau ;
et **en ce que** le gestionnaire centralisé de bande passante comporte des moyens pour, à réception, depuis l'hôte, d'une requête de réservation de bande passante entre une source et une destination pour une certaine classe de trafic, vérifier que l'hôte est autorisé à réserver la bande passante et calculer, sur la base de la vue à jour de la topologie de réseau, le chemin de réseau courant entre la source et la destination en utilisant un algorithme, ledit chemin empruntant au moins un lien du réseau, et des moyens pour vérifier sur chaque lien du chemin qu'il y a suffisamment de bande passante disponible pour la classe de trafic demandée dans la réservation demandée, ladite vérification tenant compte d'un type de trafic prioritaire dédié à la gestion dudit système de réservation,
dans lequel, si la vérification concernant la quantité de bande passante aboutit à un résultat positif, la bande passante est accordée et le gestionnaire de bande passante réserve de la bande passante sur chaque lien de réseau.

2. Système de réservation de bande passante dans un réseau de communication selon la revendication 1 **caractérisé en ce que** ledit algorithme est une version simplifiée de l'algorithme de Dijkstra.

3. Système de réservation de bande passante dans un réseau de communication selon la revendication 1 ou 2 **caractérisé en ce que** le gestionnaire centralisé comprend des moyens pour, lors d'une réservation de bande passante, mettre à jour sa propre information et appliquer une politique de réseau sur chaque équipement de réseau impliqué dans la réservation.

4. Système de réservation de bande passante dans un réseau de communication selon l'une quelconque des revendications précédentes **caractérisé en ce que** le gestionnaire centralisé de bande passante comporte des moyens pour indiquer à un hôte demandeur de réservation de bande passante s'il accepte ou non une réservation de bande passante.

5. Système de réservation de bande passante dans un réseau de communication selon l'une quelconque des revendications précédentes **caractérisé en ce que** ledit protocole de réservation de bande passante est connu par les hôtes du réseau qui souhaitent réserver de la bande passante.

6. Système de réservation de bande passante dans un réseau de communication selon l'une quelconque des revendications précédentes **caractérisé en ce que** ladite topologie possède la forme d'une liste de noeuds de réseau et de liens logiques de réseau.

7. Système de réservation de bande passante dans un réseau de communication selon l'une quelconque des revendications précédentes **caractérisé en ce qu'**il comporte des moyens pour réserver de la bande passante en fonction de besoins d'applications.

8. Dispositif de communication pour la mise en oeuvre d'un système de réservation de bande passante, dans un réseau de communication sans boucle à topologie dynamique et sans contrainte, implémentant un protocole de réservation de bande passante adapté audit réseau et relié à au moins un hôte, **caractérisé en ce qu'**il comporte :
- des moyens pour recevoir, d'une entité externe, une vue à jour de la topologie logique de réseau ;
- des moyens pour, à réception, depuis l'hôte, d'une requête de réservation de bande passante entre une source et une destination pour une certaine classe de trafic, vérifier que l'hôte est autorisé à réserver de la bande passante et calculer, sur la base de la vue à jour de la topologie de réseau, le chemin de réseau courant entre la source et la destination en utilisant un algorithme, ledit chemin empruntant au moins un lien du réseau ; et
- des moyens pour vérifier sur chacun des liens du chemin qu'il y a suffisamment de bande passante disponible pour la classe de trafic demandée dans la réservation demandée, ladite vérification tenant compte d'un type de trafic prioritaire dédié à la gestion dudit système de réservation,
- des moyens pour accorder la bande passante et des moyens pour réserver la bande passante sur chaque lien du réseau si la vérification concernant la quantité de bande passante aboutit à un résultat positif.

## Patentansprüche

1. System zur Reservierung von Bandbreite in einem Kommunikationsnetzwerk ohne Schleife mit dynamischer Topologie und ohne Einschränkung, das einen zentralisierten Bandbreitenmanager umfasst, der ein an das besagte Netzwerk angepasste Protokoll zur Reservierung von Bandbreite implementiert und der mindestens mit einem Host verbunden ist;
**dadurch gekennzeichnet, dass** eine äußere Einheit an den zentralisierten Bandbreitenmanager eine aktuelle Übersicht der logischen Topologie des Netzwerks liefert, und dadurch, dass der zentralisierte Bandbreitenmanager Mittel umfasst, um bei Empfang vom Host einer Anfrage zur Reservierung von Bandbreite zwischen einer Quelle und einem Ziel für eine bestimmte Datenverkehrsklasse zu überprüfen, dass der Host autorisiert ist, die Bandbreite zu reservieren, und auf der Grundlage der aktuellen Übersicht der Netzwerktopologie den aktuellen Netzwerkpfad zwischen der Quelle und dem Ziel unter Verwendung eines Algorithmus zu berechnen, wobei der besagte Pfad mindestens eine Netzwerkverbindung benutzt, und Mittel, um auf jeder Verbindung des Pfads zu überprüfen, dass ausreichend Bandbreite für die in der angefragten Reservierung angefragte Datenverkehrsklasse verfügbar ist, wobei die besagte Überprüfung einen prioritären Verkehrstyp berücksichtigt, der auf das Management des besagten Reservierungssystems ausgerichtet ist,
in welchem, wenn die Überprüfung hinsichtlich der Menge an Bandbreite zu einem positiven Ergebnis führt, die Bandbreite bewilligt wird und der Bandbreitenmanager Bandbreite auf jeder Netzwerkverbindung reserviert.

2. System zur Reservierung von Bandbreite in einem Kommunikationsnetzwerk nach Anspruch 1, **dadurch gekennzeichnet, dass** der besagte Algorithmus eine vereinfachte Version des Algorithmus von Dijkstra ist.

3. System zur Reservierung von Bandbreite in einem Kommunikationsnetzwerk nach Anspruch 1 oder 2, **dadurch gekennzeichnet, dass** der zentralisierte Manager Mittel umfasst, um bei einer Reservierung von Bandbreite seine eigene Information zu aktualisieren und auf jede in die Reservierung einbezogene Netzwerkausstattung eine Vernetzung anzuwenden.

4. System zur Reservierung von Bandbreite in einem Kommunikationsnetzwerk nach einen der vorstehenden Ansprüche, **dadurch gekennzeichnet, dass** der zentralisierte Bandbreitenmanager Mittel umfasst, um einem Host, der eine Reservierung von Bandbreite beantragt, mitzuteilen, ob er einer Reservierung von Bandbreite zustimmt oder nicht.

5. System zur Reservierung von Bandbreite in einem Kommunikationsnetzwerk nach einen der vorstehenden Ansprüche, **dadurch gekennzeichnet, dass** das besagte Protokoll zur Reservierung von Bandbreite den Hosts des Netzwerkes, die Bandbreite reservieren möchten, bekannt ist.

6. System zur Reservierung von Bandbreite in einem Kommunikationsnetzwerk nach einen der vorstehenden Ansprüche, **dadurch gekennzeichnet, dass** die besagte Topologie die Form einer Liste von Netzwerkknoten und logischen Netzwerkverbindungen besitzt.

7. System zur Reservierung von Bandbreite in einem Kommunikationsnetzwerk nach einen der vorstehenden Ansprüche, **dadurch gekennzeichnet, dass** es Mittel umfasst, um Bandbreite entsprechend den Anwendungserfordernissen zu reservieren.

8. Kommunikationsvorrichtung zur Umsetzung eines Systems zur Reservierung von Bandbreite in einem Kommunikationsnetzwerk ohne Schleife mit dynamischer Topologie und ohne Einschränkung, die ein an das besagte Netzwerk angepasste Protokoll zur Reservierung von Bandbreite implementiert, und die mit mindestens einem Host verbunden ist, **dadurch gekennzeichnet, dass** sie umfasst:
- Mittel für den Empfang von einer externen Einheit einer aktualisierten Übersicht der logischen Netzwerktopologie,
- Mittel, um bei Empfang vom Host einer Anfrage zur Reservierung von Bandbreite zwischen einer Quelle und einem Ziel für eine bestimmte Datenverkehrsklasse zu überprüfen, dass der Host autorisiert ist, die Bandbreite zu reservieren, und auf der Grundlage der aktuellen Übersicht der Netzwerktopologie den aktuellen Netzwerkpfad zwischen der Quelle und dem Ziel unter Verwendung eines Algorithmus zu berechnen, wobei der besagte Pfad mindestens eine Netzwerkverbindung benutzt,
- Mittel, um auf jeder Verbindung des Pfads zu überprüfen, dass ausreichend Bandbreite für die in der angefragten Reservierung angefragte Datenverkehrsklasse verfügbar ist, wobei die besagte Überprüfung einen prioritären Verkehrstyp berücksichtigt, der auf das Management des besagten Reservierungssystems ausgerichtet ist,
- Mittel, um die Bandbreite zu bewilligen und Mittel, um die Bandbreite auf jeder Netzwerkverbindung zu reservieren, wenn die Überprüfung hinsichtlich der Menge an Bandbreite zu einem positiven Ergebnis führt.

## Claims

1. Bandwidth reservation system in a loop-free communication network with dynamic and constraint-free topology, comprising a centralised bandwidth manager that implements a bandwidth reservation protocol adapted to said network, and that is linked to at least one host,
**characterized in that** an external entity supplies the centralised bandwidth manager with an updated view of the network logical topology,
and **in that** the centralised bandwidth manager comprises means for, on reception, from the host, of a bandwidth reservation request between a source and a destination for certain class of traffic, checking that the host is authorized to reserve bandwidth and calculating, on the basis of the updated view of the network topology, the current network path between the source and the destination by using an algorithm, said path borrowing at least one link of the network, and means for verifying on each link of the path that there is sufficient bandwidth available for the requested class of traffic in the requested reservation, said verification taking into account a priority type of traffic dedicated to the management of said reservation system,
wherein, if the verification concerning the quantity of bandwidth culminates in a positive result, the bandwidth is granted and the bandwidth manager reserves bandwidth on each network link.

2. Bandwidth reservation system in a communication network according to claim 1, **characterized in that** said algorithm is a simplified version of the Dijkstra algorithm.

3. Bandwidth reservation system in a communication network according to claim 1 or 2, **characterized in that** the centralised manager comprises means for, during a bandwidth reservation, updating its own information and applying a network policy on each item of network equipment involved in the reservation.

4. Bandwidth reservation system in a communication network according to any one of the aforementioned claims, **characterized in that** the centralised bandwidth manager comprises means for informing a host that requests bandwidth reservation whether or not it accepts a bandwidth reservation.

5. Bandwidth reservation system in a communication network according to any one of the aforementioned claims, **characterized in that** said bandwidth reservation protocol is known by the hosts of the network that want to reserve bandwidth.

6. Bandwidth reservation system in a communication network according to any one of the aforementioned claims, **characterized in that** said topology has the form of a list of network nodes and of network logical links.

7. Bandwidth reservation system in a communication network according to any one of the aforementioned claims, **characterized in that** it comprises means for reserving bandwidth according to application requirements.

8. Communication device for the implementation of a bandwidth reservation system, in a loop-free communication network with dynamic and constraint-free topology, implementing a bandwidth reservation protocol adapted to said network and linked to at least one host, **characterized in that** it comprises:
• means for receiving, from an external entity, an updated view of the network logical topology,
• means for, on reception, from the host, of a bandwidth reservation request between a source and a destination for a certain class of traffic, checking that the host is authorized to reserve bandwidth and calculating, on the basis of the updated view of the network topology, the current network path between the source and the destination by using an algorithm, said path borrowing at least one link of the network, and
• means for verifying on each of the links of the path that there is sufficient bandwidth available for the requested class of traffic in the requested reservation, said verification taking into account a priority type of traffic dedicated to the management of said reservation system,
• means for granting the bandwidth and means for reserving the bandwidth on each network link if the verification concerning the quantity of bandwidth culminates in a positive result.
